# FASCICULE DE BREVET EUROPEEN

(11) **EP 1 185 914 B1**
(45) Date de publication et mention de la délivrance du brevet: **28.02.2007**
(21) Numéro de dépôt: 00925345.1
(22) Date de dépôt: 27.04.2000
(51) Int. Cl.: G06F 21/00

(54) **PROCEDE POUR SECURISER UN LOGICIEL D'UTILISATION A PARTIR D'UNE UNITE DE TRAITEMENT ET DE MEMORISATION D'UN SECRET ET SYSTEME EN FAISANT APPLICATION**
VERFAHREN ZUR SICHERUNG VON SOFTWAREANWENDUNGEN MIT HILFE EINER EINHEIT ZUR VERARBEITUNG UND SPEICHERUNG GEHEIMER DATEN UND SYSTEM DAFÜR
METHOD FOR SECURING APPLICATION SOFTWARE FROM A PROCESSING UNIT AND SECRET STORAGE UNIT AND SYSTEM THEREFOR

(30) Priorité: 28.04.1999 FR 9905570
(43) Date de publication de la demande: 13.03.2002
(73) Titulaire: VALIDY, 26100 Romans sur Isère (FR)
(72) Inventeur: CUENOD, Jean-Christophe, F-78360 Montesson (FR); SGRO, Gilles, F-26300 Bourg de Péage (FR)
(74) Mandataire: Thibault, Jean-Marc
(86) Numéro de dépôt international: PCT/FR2000/001121
(87) Numéro de publication internationale: WO 2000/067094

(56) Documents cités:
- EP-A- 0 191 162
- EP-A- 0 768 601
- EP-A- 0 795 809
- WO-A-97/03398
- "DEA-BASED PSEUDORANDOM NUMBER GENERATOR" IBM TECHNICAL DISCLOSURE BULLETIN,US,IBM CORP. NEW YORK, vol. 35, no. 1B, 1 juin 1992 (1992-06-01), pages 431-434, XP000309126 ISSN: 0018-8689

## Description

### DOMAINE TECHNIQUE:

La présente invention concerne le domaine technique des systèmes de traitement de données au sens général et elle vise, plus précisément, les moyens pour sécuriser l'utilisation d'un programme ou d'un logiciel fonctionnant sur lesdits systèmes de traitement de données.

L'objet de l'invention vise, plus particulièrement, les moyens pour sécuriser un logiciel d'utilisation à partir d'une unité de traitement et de mémorisation d'un secret, désignée communément par carte à puce.

### TECHNIQUE ANTERIEURE:

Dans le domaine technique ci-dessus, le principal inconvénient concerne l'emploi non autorisé de logiciels par des utilisateurs n'ayant pas acquitté des droits de licence. Cette utilisation illicite de logiciels cause un préjudice manifeste pour les éditeurs et les distributeurs de logiciels. Pour éviter de telles copies illicites, il a été proposé dans l'état de la technique diverses solutions pour protéger des logiciels. Ainsi, il est connu une solution de sécurisation consistant à mettre en oeuvre un système matériel de protection, tel qu'un élément physique appelé clé de protection ou "dongle" en terminologie anglo-saxonne. Une telle clé de protection devrait garantir à l'éditeur du logiciel l'exécution du logiciel uniquement en présence de la clé.

Or, il doit être constaté qu'une telle solution est inefficace car elle présente l'inconvénient d'être facilement contournable. Une personne mal intentionnée ou pirate peut, à l'aide d'outils spécialisés, tels que des désassembleurs, supprimer les instructions de contrôle. Il devient alors possible de réaliser des copies illicites correspondant à des versions modifiées des logiciels n'ayant plus aucune protection. De plus, cette solution ne peut pas être généralisée à tous les logiciels, dans la mesure où il est difficile de connecter plus de deux clés de protection sur une même machine.

La demande de brevet EP 0 191 162 décrit un procédé pour assurer le cryptage d'un logiciel pour éviter une utilisation non autorisée. Un tel procédé consiste à encrypter le programme à l'aide d'une clé unique, à l'enregistrer sur un support de distribution, à utiliser pour l'exécution du programme, un ordinateur comportant une mémoire protégée et des moyens cryptographiques protégés incluant une clé secrète unique pour cet ordinateur. Le procédé consiste à fournir à l'utilisateur du programme, un mot de passe secret unique dépendant de la clé du programme et de la clé de l'ordinateur, afin que l'ordinateur puisse décrypter et exécuter le programme dans sa mémoire protégée. Selon une seconde forme de réalisation, une carte à puce possédant une clé unique peut être associée à l'ordinateur, de sorte que dans ce cas, le mot de passe secret unique fourni à l'utilisateur dépend de la clé du programme et de la clé de la carte à puce.

L'inconvénient majeur de ce procédé est de nécessiter pour l'utilisation du programme, un ordinateur ayant une mémoire protégée. Or, les ordinateurs standards ne possèdent pas une telle caractéristique, ce qui limite considérablement le déploiement de ce procédé.

Un autre inconvénient est sa mise en oeuvre pratique nécessitant, de la part de l'utilisateur, la démarche de demander à un centre de distribution de mot de passe, le mot de passe correspondant au programme et dépendant de l'ordinateur ou de la carte à puce de l'utilisateur.

Un autre inconvénient de ce procédé est de nécessiter autant de secrets qu'il y a de cartes à puce et d'obliger le centre de distribution des mots de passe à gérer tous ces secrets.

Le document WO-A-97/03398 décrit une méthode selon le préambule de la revendication 1.

### EXPOSE DE L'INVENTION :

L'objet de l'invention vise à remédier aux inconvénients de la technique antérieure en proposant un procédé pour sécuriser l'utilisation d'un logiciel à partir d'une unité de traitement et de mémorisation d'un secret, conçu pour être mis en oeuvre sur un ordinateur standard, et ne nécessitant aucune démarche de l'utilisateur auprès d'un centre de distribution de mots de passe.

Pour atteindre un tel objectif, le procédé selon l'invention vise à sécuriser un logiciel d'utilisation à partir d'une unité de traitement et de mémorisation de reconstitution comportant au moins un secret de reconstitution, ledit logiciel fonctionnant sur un système de traitement de données d'utilisation.

Le procédé selon l'invention est défini dans la revendication 1.

Le procédé selon l'invention permet ainsi de sécuriser un logiciel d'utilisation par la mise en oeuvre d'une unité de traitement et de mémorisation d'un secret de reconstitution, qui présente la particularité de conserver l'information confidentielle même après plusieurs utilisations du secret. Il apparaît ainsi que toute version dérivée du logiciel tentant de fonctionner sans ladite unité "ad hoc", est incapable de se servir des données produites par un logiciel de génération, dans la mesure où le secret de reconstitution contenu dans l'unité de traitement et de mémorisation de reconstitution est hors d'atteinte. L'utilisation d'un secret de génération permet de modifier de manière non prédictible le format de stockage des données, de sorte que l'utilisation des données modifiées ne permet pas d'obtenir un fonctionnement correct du logiciel si l'utilisateur ne possède pas le secret de reconstitution. L'objet de l'invention trouve une application particulièrement avantageuse, notamment dans le cas de logiciels associés à la distribution fréquente de bibliothèques au sens général, dont le contenu constitue des données présentant un intérêt à être protégées, comme par exemple les encyclopédies ou les jeux.

Un dispositif selon l'invention est également défini dans la revendication indépendante 12. D'autres modes de réalisation selon l'invention sont spécifiés dans les revendications dépendantes attenantes.

Diverses autres caracteristiques ressortent de la description faite ci-dessous en référence aux dessins annexés qui montrent, à titre d'exemples non limitatifs, des formes de réalisation et de mise en oeuvre de l'objet de l'invention.

### BREVE DESCRIPTION DES DESSINS :

La **fig. 1** est un schéma illustrant un exemple de réalisation matérielle permettant la mise en oeuvre de l'objet de l'invention pendant une première phase, à savoir de génération de données modifiées.
La **fig. 2** est un schéma illustrant un exemple de réalisation matérielle permettant la mise en oeuvre de l'objet de l'invention pendant une troisième phase, à savoir de mise en oeuvre du logiciel d'utilisation avec ses données modifiées.
Les **fig. 3** à **6** sont des schémas de principe d'utilisation des données modifiées associées à un logiciel, selon diverses variantes de réalisation.

### MEILLEURE MANIERE DE REALISER L'INVENTION

Conformément à l'objet de l'invention, le procédé selon l'invention comporte une première étape ou phase dite de génération de données modifiées, pendant laquelle des données modifiées sont générées à partir de données originales devant être protégées et associées à un logiciel d'utilisation. Le procédé selon l'invention comporte une deuxième étape ou phase de mise à disposition à un utilisateur, du logiciel et des données modifiées associées, et une troisième étape ou phase dite de mise en oeuvre, au cours de laquelle est utilisé le logiciel d'utilisation avec les données modifiées associées.

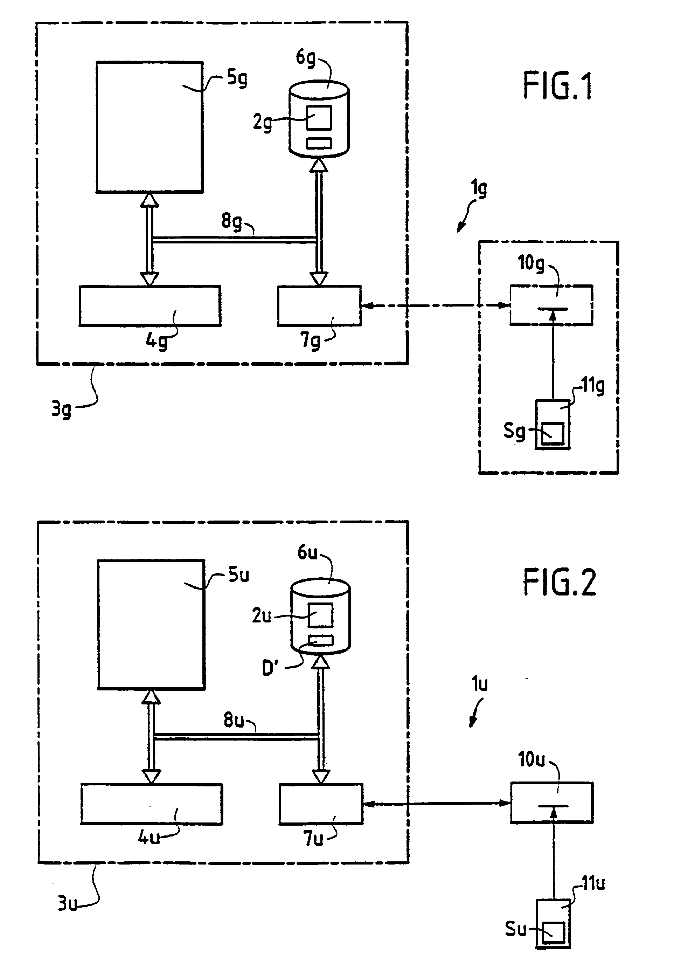

La **fig. 1** illustre un dispositif de génération **1_{g}** permettant de mettre en oeuvre la phase de génération de données modifiées du procédé conforme à l'invention. Ce dispositif de génération **1_{g}** est adapté pour mettre en oeuvre un logiciel de génération **2_{g}** de données modifiées dont la fonction apparaîtra plus clairement dans la suite de la description. Dans l'exemple de réalisation illustré, le dispositif de génération **1_{g}** comporte un système de traitement de données, dit de génération **3_{g}** de tous types connus en soi, appelé système de génération **3_{g}** dans la suite de la description. Dans l'exemple considéré, le système de génération **3_{g}** constitue un ordinateur mais il doit être considéré qu'un tel système de génération **3_{g}** peut faire partie intégrante de divers dispositifs, au sens général. Dans l'exemple considéré, le système de génération **3_{g}** comporte au moins un processeur **4_{g},** au moins une mémoire de travail **5_{g},** au moins un support de mémorisation de données **6_{g}** et au moins un circuit interface d'entrées-sorties **7_{g}**. Classiquement, les divers composants du système de génération **3_{g}** sont reliés entre-eux par l'intermédiaire d'un bus de communication **8_{g}**.

Selon une première variante de réalisation, le circuit interface **7_{g}** est relié à un lecteur **10_{g}** d'une unité **11_{g}** de traitement et de mémorisation, dite de génération, comportant au moins un secret de génération **S_{g}**. Selon cet exemple, cette unité de génération **11_{g}** est destinée à être écrite ou lue par le lecteur **10_{g}**, mais il doit être considéré qu'une telle unité de génération **11_{g}** peut se présenter sous la forme d'une clé matérielle de tous types, connectée sur un circuit d'entrée/sortie, directement sur le bus de communication **8_{g}**, ou par tout autre moyen de communication, tel qu'une liaison radio, par exemple. D'une manière générale, l'unité de génération **11_{g}** comporte au moins un secret de génération **S_{g}** ou un dispositif de mémorisation d'une information codée, des moyens algorithmiques de traitement de données, et un système d'échange de données entre l'unité de génération **11_{g}** et le système génération **3_{g}.** Classiquement, l'unité de génération **11_{g}** est réalisée par une carte à puce.

Selon une deuxième variante de réalisation, le secret de génération **S_{g}** est un paramètre du logiciel de génération **2_{g}**.

Un tel dispositif de génération **1_{g}** permet d'exécuter une sous-phase de création de données. Lors de cette sous-phase, il est établi en relation du logiciel d'utilisation **2ᵤ,** des données dites originales **D** associées. Ces données originales **D**, qui sont destinées à être associées au logiciel d'utilisation **2ᵤ** lors de la mise en oeuvre de ce dernier, constituent des données devant être protégées compte tenu de leur intérêt économique. Ces données originales **D** peuvent constituer, par exemple, une bibliothèque associée à un logiciel d'encyclopédie ou des scènes de jeux associées à un logiciel de jeu.

A partir d'au moins une partie de ces données originales **D**, le procédé assure dans une sous-phase de modification, la détermination de données modifiées **D'** en mettant en oeuvre un secret de génération **S_{g}**. Les données originales **D** et les données modifiées **D'** sont obtenues à partir d'un logiciel de génération **2_{g}** au sens général. Selon la première variante de réalisation, le secret de génération **S_{g}** peut être inclus dans une unité de traitement et de mémorisation, dite de génération **11_{g}**. La mise en oeuvre de cette unité de génération **11_{g}** permet, lorsque le secret de génération **S_{g}** n'est pas connu, de rendre difficile, voire impossible, la déduction des données modifiées **D'** à partir des données originales **D**, même pour la personne ayant généré les données modifiées associées au logiciel. Selon la deuxième variante de réalisation, le secret de génération **S_{g}** peut être directement associé au logiciel de génération **2_{g},** de sorte que son caractère secret existe à l'exclusion du ou des développeurs du logiciel.

Cette phase de génération de données modifiées est suivie par une phase de mise à disposition pour laquelle les données modifiées **D'** sont fournies aux utilisateurs en association avec le logiciel d'utilisation **2ᵤ.** Ainsi, au terme d'une phase de génération de données, il est mis à disposition d'au moins un utilisateur, le logiciel d'utilisation **2ᵤ** et des données modifiées **D'** obtenues à partir d'un secret de génération **S_{g}** et d'au moins une partie des données originales **D** associées au logiciel d'utilisation **2ᵤ.**

Un tel logiciel d'utilisation avec ses données modifiées **D',** peut alors être mis en oeuvre par au moins un utilisateur pendant une phase d'utilisation, dite phase de mise en oeuvre. Cette phase de mise en oeuvre est décomposée en une sous-phase dite fonctionnelle, au cours de laquelle l'utilisateur utilise les fonctionnalités du logiciel, et en une sous-phase de reconstitution des données originales **D.** Au cours de la sous-phase de reconstitution, chaque utilisateur pourvu d'un secret de reconstitution associé au logiciel d'utilisation **2ᵤ,** est en mesure de modifier de façon inverse ou décoder les données modifiées **D'**, afin de retrouver et d'utiliser les données originales **D.** Il doit être compris que les données modifiées **D'** sont retraduites par le logiciel d'utilisation **2ᵤ** pour permettre de retrouver ou de reconstituer les données originales **D,** en présence du secret de reconstitution **Sᵤ**.

La **fig. 2** illustre un dispositif d'utilisation **1ᵤ** permettant de mettre en oeuvre la troisisème phase du procédé conforme à l'invention. Dans l'exemple de réalisation illustré, le dispositif d'utilisation **1ᵤ** comporte un système de traitement de données, dit d'utilisation **3ᵤ** de tous types connus en soi, désigné par système d'utilisation **3ᵤ** dans la suite de la description. Dans l'exemple considéré, le système d'utilisation **3ᵤ** constitue un ordinateur mais il doit être noté qu'un tel système d'utilisation **3ᵤ** peut faire partie intégrante de diverses machines, dispositifs ou véhicules au sens général. Dans l'exemple considéré, le système d'utilisation **3ᵤ** comporte au moins un processeur **4ᵤ**, au moins une mémoire de travail **5ᵤ**, au moins un support de mémorisation de données **6ᵤ** et au moins un circuit interface d'entrées-sorties **7ᵤ**. Classiquement, les divers composants du système d'utilisation **3ᵤ** sont reliés entre-eux par l'intermédiaire d'un bus de communication **8ᵤ**. Le circuit interface **7ᵤ** est relié à un lecteur **10ᵤ** d'une unité de traitement et de mémorisation, dite de reconstitution **11ᵤ,** comportant au moins un secret de reconstitution **Sᵤ**. Dans l'exemple illustré, cette unité **11ᵤ,** dite de reconstitution dans la suite de la description, est destinée à être écrite ou lue par le lecteur **10ᵤ**, mais il doit être considéré qu'une telle unité de reconstitution **11ᵤ** peut se présenter sous la forme d'une clé matérielle de tous types, connectée sur un circuit d'entrée/sortie, directement sur le bus de communication **8ᵤ**, ou par tout autre moyen de communication, tel qu'une liaison radio, par exemple. D'une manière générale, l'unité de reconstitution **11ᵤ** comporte au moins un secret de reconstitution **Sᵤ** ou un dispositif de mémorisation d'une information codée, des moyens algorithmiques de traitement de données, et un système d'échange de données entre l'unité de reconstitution **11ᵤ** et le système d'utilisation **3ᵤ.** Classiquement, l'unité de reconstitution **11ᵤ** est réalisée par une carte à puce.

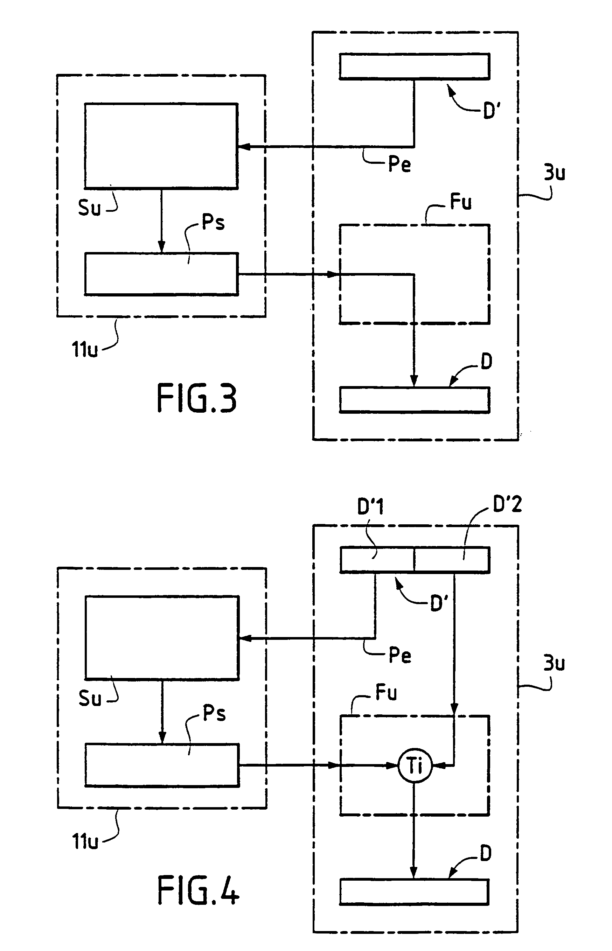

La **fig. 3** illustre une première variante de réalisation du procédé conforme à l'invention permettant de traduire de façon inverse, les données modifiées **D'**, afin de retrouver ou de reconstituer les données originales **D**, en mettant en oeuvre le dispositif de d'utilisation **1ᵤ** Le procédé consiste à choisir au moins un paramètre d'entrée **Pₑ** pour l'unité de reconstitution **11ᵤ.** Ce paramètre d'entrée **Pₑ** est constitué par au moins une partie des données modifiées **D'.** Le paramètre d'entrée **Pₑ** est transféré du système d'utilisation **3ᵤ** à l'unité de reconstitution **11ᵤ.** Cette unité de reconstitution **11ᵤ** assure la détermination d'au moins un paramètre de sortie **Pₛ** à partir d'au moins un secret de reconstitution **Sᵤ** et du paramètre d'entrée **Pₑ.**

Il est à noter que le secret de reconstitution **Sᵤ** peut être constitué soit par au moins une fonction secrète qui, à partir du paramètre d'entrée **Pₑ,** génère le paramètre de sortie **P₃,** soit par au moins une information secrète et au moins une fonction de conversion connue ou non, permettant de délivrer à partir du paramètre d'entrée **Pₑ** et de l'information secrète, le paramètre de sortie **Pₛ.** La mise en oeuvre de l'unité de reconstitution **11ᵤ** permet, lorsque le secret de reconstitution n'est pas connu, de rendre difficile, voire impossible, la déduction du paramètre de sortie **Pₛ,** à partir du paramètre d'entrée **Pₑ.**

L'unité de reconstitution **11ᵤ** assure ensuite le transfert du paramètre de sortie **Pₛ** au système d'utilisation **3ᵤ** Un tel système d'utilisation **3ᵤ** assure la mise en oeuvre d'au moins une fonction de reconstitution **Fᵤ** qui en utilisant au moins en partie le paramètre de sortie **Pₛ,** permet d'obtenir les données originales **D.**

Dans un exemple préféré de la variante de réalisation illustrée à la **fig. 3,** le paramètre d'entrée **Pₑ** est égal aux données modifiées **D',** tandis que le paramètre de sortie **Pₛ** est égal aux données originales **D** reconstituées. Lors de la phase de génération des données modifiées, le secret de génération **S_{g}** assure une fonction de transformation inverse du secret de reconstitution **Sᵤ,** c'est-à-dire que son paramètre d'entrée est égal aux données originales **D**, tandis que le paramètre de sortie de l'unité de génération est égal aux données modifiées **D'**.

Il apparaît ainsi que le détenteur d'une unité de reconstitution **11ᵤ** affectée à un logiciel d'utilisation **2ᵤ** déterminé peut retrouver et utiliser les données originales **D** associées audit logiciel. En effet, la mise en oeuvre du logiciel d'utilisation **2ᵤ** permet, en présence de l'unité de reconstitution **11ᵤ** "ad hoc", de traduire les données modifiées **D'** associées audit logiciel **2ᵤ,** en vue d'obtenir les données originales **D.** Par contre, un utilisateur ne possédant pas l'unité de reconstitution **11ᵤ** correspondante au logiciel d'utilisation **2ᵤ** peut utiliser ce dernier à l'exception des données originales **D** et au mieux avec les données modifiées.

De plus, l'efficacité du procédé selon l'invention est réelle, même si la fonction de reconstitution **Fᵤ** est connue et si les paramètres d'entrée **Pₑ** et de sortie **Pₛ** sont observables et modifiables par une personne mal intentionnée en considérant, bien entendu, que le secret de reconstitution **Sᵤ** est conservé. En effet, une telle personne est incapable de retrouver la modification des données **D'** en données **D**, sans l'aide de l'unité de reconstitution **11ᵤ**.

Une personne mal intentionnée peut tenter de modifier le logiciel d'utilisation **2ᵤ**, de manière à ne plus avoir besoin de l'unité de reconstitution **11ᵤ** correspondante. Pour ce faire, il convient de disposer, tout d'abord, de l'unité de reconstitution **11**ᵤ "ad hoc". Ensuite, il est nécessaire que cette personne énumère l'ensemble des données modifiées **D'** pour, soit établir une table de correspondance entre tous les paramètres d'entrée **Pₑ** et les paramètres de sortie **Pₛ,** en vue de générer un pseudo-simulateur de l'unité de reconstitution **11ᵤ,** soit reconstituer l'ensemble des données originales **D** et établir une nouvelle distribution d'un logiciel d'utilisation **2'ᵤ** incluant ces données originales reconstituées à la place des données modifiées, et permettant de s'affranchir de la phase de reconstitution ou de traduction en sens inverse des données modifiées. Cependant, une telle tâche est difficile en raison du grand nombre de données originales.

Dans l'exemple de réalisation illustré à la **fig. 3,** les données modifiées **D'** sont transférées totalement à l'unité de reconstitution **11ᵤ.** Pour améliorer la vitesse d'un tel dispositif, les **fig. 4** à **6** décrivent diverses variantes préférées de réalisation du procédé de sécurisation conforme à l'invention.

La fig. 4 illustre une deuxième variante de réalisation pour la phase de mise en oeuvre du logiciel d'utilisation **2ᵤ** avec les données modifiées. Selon cet exemple, les données modifiées **D'** sont décomposées en au moins une première partie **D'₁** et une deuxième partie **D'₂.** Au moins la première partie **D'₁** des données modifiées est choisie comme paramètre d'entrée **Pₑ.** Ce paramètre d'entrée **Pₑ** est transféré à l'unité de reconstitution **11ᵤ** qui, à l'aide du secret de reconstitution **Sᵤ,** détermine un paramètre de sortie **Pₛ.** L'unité de reconstitution **11ᵤ** transfère le paramètre de sortie **Pₛ** au système d'utilisation **3ᵤ.** Le système d'utilisation **3ᵤ** met en oeuvre une fonction de reconstitution **Fᵤ** qui comporte une fonction de traduction inverse **Tᵢ** qui en utilisant au moins en partie le paramètre de sortie **Pₛ** et la deuxième partie **D'₂** des données modifiées **D',** permet de retrouver ou de reconstituer les données originales **D**.

Selon un exemple préféré de réalisation de la variante illustrée à la **fig. 4**, il est choisi comme première partie et deuxième partie des données modifiées **D'**, respectivement un nombre pseudo-aléatoire qui a été choisi lors de la phase de génération, et des données originales qui ont été modifiées lors de la phase de génération et appelées données originales modifiées **D'₂**. Ce nombre pseudo-aléatoire est utilisé comme paramètre d'entrée **Pₑ** et transformé par le secret de reconstitution **Sᵤ** pour obtenir le paramètre de sortie **Pₛ**. La fonction de traduction inverse **Tᵢ** permet, à partir du paramètre de sortie **Pₛ** et des données originales modifiées **D'₂**, d'obtenir les données originales **D**. Dans la phase de génération de données modifiées, correspondant à cet exemple préféré de réalisation, il est choisi un nombre pseudo-aléatoire comme paramètre d'entrée du secret de génération **S_{g}** qui délivre un paramètre de sortie de génération. Un tel paramètre de sortie est utilisé pour modifier par une fonction de traduction **T**, les données originales **D,** en vue d'obtenir les données originales modifiées. Ces données originales modifiées forment en association avec le nombre pseudo-aléatoire, les données modifiées **D'**. Bien entendu, la fonction de traduction inverse **Tᵢ** est constituée par la fonction inverse de la fonction de traduction **T** ou par une combinaison de fonctions élémentaires équivalentes.

Selon la variante illustrée à la **fig. 4**, la modification des données originales **D** est totalement indépendante de ces données **D**.

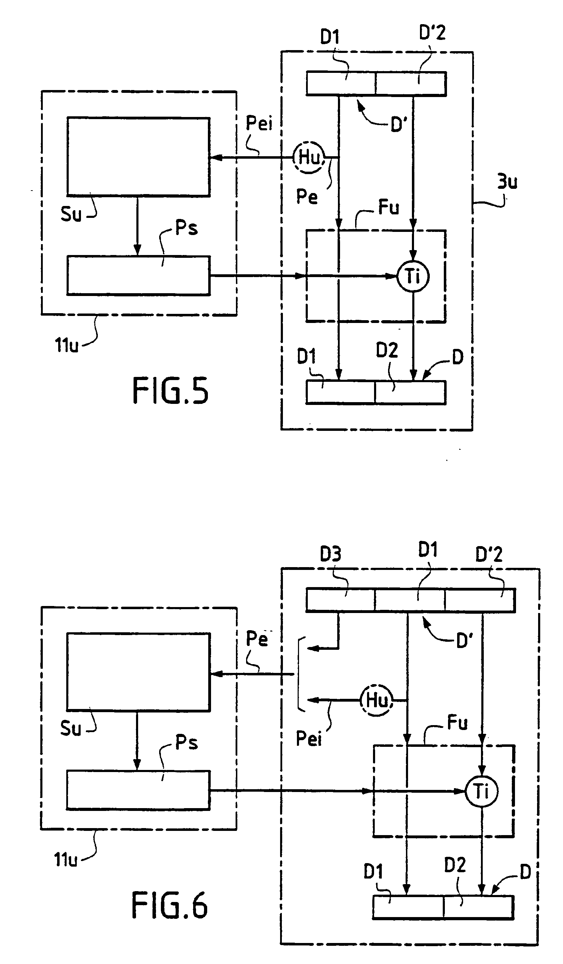

La **fig. 5** illustre une troisième variante de réalisation pour la phase de mise en oeuvre du logiciel d'utilisation **2ᵤ** avec les données modifiées **D'.** Selon cette variante de réalisation, les données modifiées **D'** sont formées d'une première partie **D₁** et d'une deuxième partie **D'₂.** Au moins une partie de cette première partie **D₁,** qui correspond au paramètre d'entrée **Pₑ,** est transférée à l'unité de reconstitution **11ᵤ** qui détermine un paramètre de sortie **Pₛ** à l'aide du secret de reconstitution **Sᵤ**. Le paramètre de sortie **Pₛ** est transféré au système d'utilisation **3ᵤ** qui met en oeuvre une fonction de reconstitution **Fᵤ** comportant une fonction de traduction inverse **Tᵢ** qui en utilisant au moins en partie, le paramètre de sortie **Pₛ** et la deuxième partie **D'₂** des données, permet de retrouver ou de reconstituer la deuxième partie originale **D₂** des données. La fonction de reconstitution **Fᵤ** délivre également la première partie **D₁** des données originales qui associée à la deuxième partie **D₂,** forment les données originales **D.**

Selon un exemple préféré de réalisation de la variante illustrée à la **fig. 5,** la première partie **D₁** correspond à une partie des données originales, tandis que la deuxième partie **D'₂** correspond à l'autre partie des données originales qui ont été modifiées lors de la phase de génération et qui est appelée deuxième partie modifiée **D'₂** des données. La première partie **D₁** des données originales est transformée par le secret de reconstitution **Sᵤ** pour obtenir le paramètre de sortie **Pₛ**. Par ailleurs, la fonction de reconstitution **Fᵤ** comporte une fonction de traduction inverse **Tᵢ** qui, à partir du paramètre de sortie **Pₛ** et de la deuxième partie modifiée **D'₂** des données, permet de retrouver la deuxième partie **D₂** des données originales. De plus, la fonction de reconstitution **Fᵤ** est adaptée pour délivrer aussi la première partie **D₁** des données originales qui, en combinaison avec la deuxième partie **D₂** des données originales, forment les données originales **D.** Dans la phase de génération correspondant à cet exemple préféré de réalisation, les données originales **D** sont décomposées en une première partie **D₁** et une deuxième partie **D₂.** Au moins une partie de la première partie **D₁** est utilisée comme paramètre d'entrée du secret de génération **S_{g}** qui délivre un paramètre de sortie de génération. Au moins une partie du paramètre de sortie de génération est utilisée par une fonction de traduction faisant partie d'une fonction de génération pour traduire la deuxième partie **D₂** des données originales, en vue d'obtenir une deuxième partie modifiée **D'₂** des données. A la première partie **D₁** des données originales est associée cette deuxième partie modifiée **D'₂** des données, en vue de constituer les données modifiées **D'**.

Selon cette variante de réalisation, la modification des données originales **D** dépend uniquement de ces données **D.**

La **fig. 6** illustre une quatrième variante de réalisation pour la phase de mise en oeuvre du logiciel d'utilisation **2ᵤ** avec les données modifiées **D'.** Selon cet exemple, les données modifiées **D'** sont décomposées en une première partie **D₁,** une deuxième partie **D'₂** et une troisième partie **D₃.** Le paramètre d'entrée **Pₑ** est constitué par au moins une partie de la première partie **D₁** et de la troisième partie **D₃.** Le paramètre d'entrée **Pₑ** est transféré à l'unité de reconstitution **11ᵤ** qui détermine un paramètre de sortie **Pₛ** à l'aide d'un secret de reconstitution **Sᵤ.** Le paramètre de sortie **Pₛ** est transféré au système d'utilisation **3ᵤ** qui met en oeuvre une fonction de reconstitution **Fᵤ** comportant une fonction de traduction inverse **Tᵢ** qui en utilisant au moins en partie le paramètre de sortie **Pₛ** et la deuxième partie **D'₂** des données, permet de retrouver ou de reconstituer la deuxième partie originale **D₂** des données. La fonction de reconstitution **Fᵤ** délivre également la première partie **D₁** des données originales qui, associée à la deuxième partie originale **D₂** des données, forme les données originales **D.**

Selon un exemple préféré de réalisation de la variante illustrée à la **fig**. **6,** la troisième partie **D₃** correspond à un nombre pseudo-aléatoire qui a été choisi lors de la phase de génération, tandis que la première partie **D₁** correspond à une partie des données originales **D,** alors que la deuxième partie **D'₂** correspond à l'autre partie des données originales qui a été modifiée lors de la phase de génération et qui est appelée deuxième partie modifiée **D'₂** des données. Au moins une partie de la première partie **D₁**des données originales et au moins une partie du nombre pseudo-aléatoire forment le paramètre d'entrée **Pₑ** qui est transformé par le secret de reconstitution **Sᵤ** pour obtenir le paramètre de sortie **Pₛ.** Par ailleurs, la fonction de reconstitution **Fᵤ** comporte une fonction de traduction inverse **Tᵢ** qui, à partir du paramètre de sortie **Pₛ** et de la deuxième partie modifiée **D'₂** des données, permet de retrouver ou de reconstituer la deuxième partie **D₂** des données originales. De plus, la fonction de reconstitution **Fᵤ** est adaptée pour délivrer aussi la première partie **D₁** des données qui, en combinaison avec la deuxième partie **D₂** des données originales, forme les données originales **D.** Dans la phase de génération correspondant à cet exemple préféré de réalisation, les données originales **D** sont décomposées en une première partie **D₁** et une deuxième partie **D₂,** tandis qu'un nombre pseudo-aléatoire est choisi comme troisième partie **D₃.** Au moins une partie de la première partie **D₁** des données et au moins une partie du nombre pseudo-aléatoire sont utilisées comme paramètres d'entrée du secret de génération **S_{g}** qui délivre un paramètre de sortie de génération. Au moins une partie du paramètre de sortie de génération est utilisée par une fonction de génération pour traduire la deuxième partie **D₂** des données originales, en vue d'obtenir une deuxième partie modifiée **D'₂** des données. Le nombre pseudo-aléatoire **D₃** et la première partie **D₁** des données originales sont associés à cette deuxième partie modifiée **D'₂,** afin de constituer les données modifiées **D'**.

Selon cette variante de réalisation, la modification des données originales **D** dépend simultanément de ces données **D** et d'un nombre pseudo-aléatoire.

Selon une variante préférée de réalisation attachée aux exemples décrits aux **fig. 5** et **6,** la première partie **D₁** des données destinées à être transférées à l'unité de reconstitution **11ᵤ,** est traitée pour faciliter les opérations de traitement exécutées par l'unité de reconstitution **11ᵤ.** Cette partie **D₁** des données est ainsi fournie en entrée à au moins une fonction de traduction d'utilisation intermédiaire **Hᵤ**, telle qu'une fonction non inversible, par exemple du type "one way hash", de manière à obtenir au moins un paramètre d'entrée intermédiaire **Pₑᵢ**. Ce paramètre d'entrée intermédiaire **Pₑᵢ** déterminé par le système d'utilisation **3ᵤ,** est éventuellement combiné avec la troisième partie **D₃** pour former le paramètre d'entrée **Pₑ.** Ce paramètre d'entrée **Pe** est transféré à l'unité de reconstitution **11ᵤ,** de manière que cette dernière puisse assurer la détermination du paramètre de sortie **Pₛ** à partir du secret de reconstitution **Sᵤ** et du paramètre d'entrée intermédiaire **Pₑᵢ**, et éventuellement de la troisième partie **D₃**.

Bien entendu, lors de la phase de génération des données modifiées **D'**, le système de génération met en oeuvre au moins une fonction de traduction intermédiaire de génération, de manière à obtenir au moins un paramètre d'entrée intermédiaire de génération.

Dans les exemples des **fig. 5** et **6,** il ressort que dans la phase de mise en oeuvre, les données originales **D** sont obtenues au cours d'une étape de traitement mettant en oeuvre l'unité de reconstitution **11ᵤ.** Bien entendu, il peut être prévu de recommencer n fois cette étape de traitement pour augmenter la complexité du décodage des données. Ainsi, les opérations suivantes peuvent être recommencées autant de fois que nécessaires, à savoir :
- décomposer les données précédemment obtenues en au moins une première et une deuxième parties,
- déterminer au moins un paramètre de sortie à partir d'une fonction d'un ou de plusieurs secrets de reconstitution différents ou identiques de celui ou de ceux précédemment utilisés, et d'une partie des données,
- modifier au moins l'une des autres parties des données par une fonction de traduction identique ou différente de celle précédemment utilisée,
- et reconstituer des données après chaque phase de traitement des données.

Selon cet exemple de réalisation, lors de la sous-phase de modification, les étapes de génération des données sont conduites dans l'ordre inverse, un nombre de fois n identique au nombre d'étapes effectuées lors de la sous-phase de reconstitution.

Selon une variante préférée de réalisation selon les fig. 5 et 6, les données modifiées **D'** sont composées d'au moins deux parties **D'₁**, **D'₂,** par exemple de tailles sensiblement équivalentes. Dans une première étape de traitement, la deuxième partie **D'₂** est utilisée comme paramètre d'entrée de l'unité de reconstitution **11ᵤ,** en vue de retrouver la première partie **D₁** des données originales. Après une première étape de traitement, il est obtenu des données intermédiaires constituées par au moins la première partie **D₁** des données originales et la deuxième partie modifiée **D'₂** des données. Dans une deuxième étape de traitement, le rôle des parties **D₁** et **D'₂** est inversé. Ainsi, au moins la première partie **D₁** des données est utilisée comme paramètre d'entrée de l'unité de reconstitution **11ᵤ** tandis que la deuxième partie modifiée **D'₂** des données originales est modifiée par une fonction de traduction, en vue de retrouver la deuxième partie **D₂** des données originales. Il s'ensuit que l'ensemble des données originales **D** sont reconstituées après un décodage de la totalité des données modifiées **D'**. Bien entendu, lors de la sous-phase de modification, des opérations inverses sont effectuées afin de coder ou de modifier l'ensemble des données originales **D.**

Selon une caractéristique préférée de mise en oeuvre de l'invention, les données modifiées **D'** sont écrites ou enregistrées sur le support **6ᵤ** de mémorisation de données, associé au système d'utilisation **3ᵤ** pour permettre l'utilisation des données modifiées **D'** lors de la phase de mise en oeuvre du logiciel d'utilisation **2ᵤ.** Bien entendu, le support **6ᵤ** de mémorisation de données peut être constitué de toute manière connue, telle que par exemple un disque dur, une bande magnétique, un CD ROM, ou tout autre dispositif de mémorisation utilisé en vue du stockage ou d'une transmission de ces données.

Le procédé selon l'invention décrit ci-dessus peut être mis en oeuvre avec différentes fonctions de reconstitution **Fᵤ** selon les objectifs souhaités par l'éditeur du logiciel protégé. Par exemple, la fonction de reconstitution **Fᵤ** peut comporter une fonction de cryptage. Dans ce cas, les données traduites sont manifestement incompréhensibles. Selon un autre exemple de réalisation, la fonction de reconstitution **Fᵤ** peut être une fonction de modification mineure pseudo-aléatoire des chiffres contenus dans les données originales. De cette manière, l'utilisateur d'un logiciel piraté **2'ᵤ** peut utiliser les données associées à la version originale du logiciel, mais celles-ci aboutissent à un fonctionnement erroné du logiciel piraté **2'ᵤ.**

## Revendications

1. - Procédé pour sécuriser un logiciel d'utilisation (**2ᵤ**) à partir d'une unité de reconstitution (**11ᵤ**) comportant au moins un secret de reconstitution (**Sᵤ**), ledit logiciel fonctionnant sur un système de traitement de données d'utilisation (**3ᵤ**),
→ dans une phase de génération de données modifiées (**D'**) :
- dans une sous-phase de création de données, à établir, à partir d'un logiciel de génération, des données dites originales (**D**) associées au logiciel d'utilisation (**2ᵤ**),
- dans une sous-phase de modification, à assurer la détermination de données modifiées (**D'**) à partir d'un secret de génération (**S_{g}**) et d'au moins une partie des données originales (**D**) associées,
→ dans une phase de mise à disposition, à distribuer à un utilisateur le logiciel d'utilisation (**2ᵤ**) et les données modifiées (**D'**) associées,
→ et dans une phase de mise en oeuvre sur un système d'utilisation (**3ᵤ**) du logiciel d'utilisation (**2ᵤ**) avec les données modifiées (**D'**) associées, dans une sous-phase de reconstitution des données originales :
• pour un utilisateur possédant une unité de reconstitution (**11ᵤ**) comportant un secret de reconstitution (**Sᵤ**):
◇ à choisir par ledit système de traitement de données d'utilisation (**3ᵤ**) un paramètre d'entrée (**Pₑ**) constitué par au moins une partie des données modifiées (**D'**).
◇ à transférer le paramètre d'entrée (**Pₑ**) du système de traitement de données d'utilisation (**3ᵤ**) à l'unité de reconstitution (**11ᵤ**),
◇ à assurer la détermination par ladite unité de reconstitution à l'aide du système de traitement de données d'utilisation (**11ᵤ**), d'au moins un paramètre de sortie (**Pₛ**) à partir du secret de reconstitution (**Sᵤ**) et du paramètre d'entrée (**Pₑ**),
◇ à transférer le paramètre de sortie (**Pₛ**) de l'unité de reconstitution (**11ᵤ**) au système de traitement de données d'utilisation (**3ᵤ**),
◇ et à mettre en oeuvre dans le système de traitement de données d'utilisation au moins une fonction de reconstitution (**Fᵤ**) utilisant au moins en partie, le paramètre de sortie (**Pₛ**), en vue d'obtenir les données originales (**D**),
**caractérisé en ce qu'**il consiste :
• pour un utilisateur ne possédant pas l'unité de reconstitution (**11ᵤ**), à permettre d'utiliser le logiciel d'utilisation (**2ᵤ**) à l'aide du système de traitement de données d'utilisation au mieux avec les données modifiées.

2. - Procédé selon la revendication 1, **caractérisé en ce qu'**il consiste :
- à décomposer les données modifiées (**D'**) en au moins une première partie (**D'₁**) et une deuxième partie (**D'₂**),
- à choisir comme paramètre d'entrée (**Pₑ**), la première partie (**D'₁**) des données modifiées,
- et à mettre en oeuvre une fonction de reconstitution (**Fᵤ**) qui délivre les données originales (**D**) en utilisant le paramètre de sortie (**Pₛ**) et la deuxième partie (**D'₂**) des données modifiées.

3. - Procédé selon la revendication 1, **caractérisé en ce qu'**il consiste :
- à décomposer les données modifiées (**D'**) en au moins une première partie (**D₁**) et une deuxième partie (**D'₂**),
- à choisir comme paramètre d'entrée (**Pₑ**), la première partie (**D₁**) des données modifiées,
- et à mettre en oeuvre une fonction de reconstitution (**Fᵤ**) qui délivre les données originales en utilisant le paramètre de sortie (**Pₛ**), la première partie (**D₁**) et la deuxième partie (**D'₂**) des données modifiées.

4. - Procédé selon la revendication 1, **caractérisé en ce qu'**il consiste :
- à décomposer les données modifiées (**D'**) en au moins une première partie (**D₁**), une deuxième partie (**D'₂**) et une troisième partie (**D₃**),
- à déterminer le paramètre d'entrée (**Pₑ**) à partir d'au moins la première partie (**D₁**) et d'au moins la troisième partie (**D₃**),
- et à mettre en oeuvre une fonction de reconstitution (**Fᵤ**) qui délivre les données originales (**D**) en utilisant le paramètre de sortie (**Pₛ**), la première partie (**D₁**) et la deuxième partie (**D'₂**) des données modifiées.

5. - Procédé selon la revendication 3 ou 4, **caractérisé en ce qu'**il consiste:
- à choisir comme paramètre d'entrée (**Pₑ**), un paramètre d'entrée intermédiaire (**P**_{**e**i}) défini par le système d'utilisation de traitement de données (**3ᵤ**)**,** à partir d'une fonction de traduction intermédiaire (**Hᵤ**) utilisant une partie des données modifiées,
- et à assurer la détermination du paramètre de sortie à partir du secret de reconstitution (**Sᵤ**) et du paramètre d'entrée (**Pₑ**), constitué du paramètre d'entrée intermédiaire (**Pₑᵢ**) et éventuellement de la troisième partie des données (**D₃**).

6. - Procédé selon la revendication 1, **caractérisé en ce qu'**il consiste à assurer la détermination de données modifiées (**D'**) à partir du secret de génération (**S_{g}**) contenu dans une unité de traitement et de mémorisation de génération (**11_{g}**)**.**

7. - Procédé selon la revendication 1, **caractérisé en ce qu'**il consiste à assurer la détermination de données modifiées (**D'**) à partir d'un secret de génération (**S_{g}**) associé à un logiciel de génération (**2_{g}**).

8. - Procédé selon la revendication 3 ou 4, **caractérisé en ce qu'**il consiste à recommencer n fois avec n ≥ 1, les opérations :
- de décomposition des données précédemment obtenues en au moins une première et deuxième parties,
- de détermination d'au moins un paramètre de sortie à partir d'une fonction d'un ou de plusieurs secrets d'utilisation différents ou identiques à ceux précédemment utilisés, et d'une partie des données,
- de modification d'au moins l'une des autres parties des données par une fonction de traduction identique ou différente à celle précédemment utilisée,
- et de reconstitution des données après chaque phase de traitement des données.

9. - Procédé selon la revendication 8, **caractérisé en ce qu'**il consiste, dans la sous-phase de reconstitution des données originales (**D**):
- dans une première étape de traitement:
• à décomposer les données modifiées (**D'**) en au moins une première partie (**D'₁**) et une deuxième partie (**D'₂**),
• à utiliser au moins en partie, la deuxième partie (**D'₂**) comme paramètre d'entrée de l'unité de reconstitution (**11ᵤ**), en vue de retrouver la première partie (**D₁**) des données originales,
• et à constituer des données intermédiaires composées par au moins la première partie (**_{D1}**) des données originales et la deuxième partie modifiée (**D'₂**) des données,
- et dans une deuxième étape de traitement:
• à utiliser, au moins en partie, la première partie (**D₁**) des données, comme paramètre d'entrée de l'unité de reconstitution (**11ᵤ**), en vue de retrouver la deuxième partie (**D₂**) des données originales,
• et à reconstituer les données originales (**D**) par la première partie (**D₁**) et la deuxième partie (**D₂**) des données.

10. - Procédé selon la revendication 8 ou 9, **caractérisé en ce qu'**il consiste à effectuer n fois, avec n ≥ 1, dans l'ordre inverse des opérations de traduction des données modifiées (**D'**) en données originales (**D**), les opérations de traduction des données originales (D) pour obtenir les données modifiées (**D'**).

11. - Procédé selon la revendication 1, **caractérisé en ce qu'**il consiste à écrire les données modifiées (**D'**) sur un support (**6ᵤ**) de mémorisation de données, associé au système de traitement de données d'utilisation (**3ᵤ**) pour permettre l'utilisation des données modifiées (**D'**) lors de la phase de mise en oeuvre du logiciel d'utilisation (**2ᵤ**).

12. - Dispositif pour sécuriser un logiciel d'utilisation (**2ᵤ**) à partir d'une unité de reconstitution (**11ᵤ**) comportant au moins un secret de reconstitution (**Sᵤ**), ledit logiciel fonctionnant sur un système d'utilisation (**3ᵤ**), comportant une unité de génération (**11_{g}**) qui attribue audit logiciel d'utilisation (**2ᵤ**) des données modifiées (**D'**) obtenues lors d'une phase de génération des données modifiées (**D'**), à partir d'un secret de génération (**S_{g}**) et d'au moins une partie des données originales (**D**), associées audit logiciel d'utilisation,
ledit système d'utilisation (**3ᵤ**) comportant et mettant en oeuvre pendant une phase de mise en oeuvre dudit logiciel d'utilisation (**2ᵤ**) avec les données modifiées (**D'**),
• des moyens permettant de déterminer un paramètre d'entrée (**Pₑ**) constitué par au moins une partie des données modifiées (**D'**),
• des moyens de transfert du paramètre d'entrée (**Pₑ**) du système d'utilisation (**3ᵤ**) à l'unité de reconstitution (**11ᵤ**),
• au moins une fonction de reconstitution (**Fᵤ**),
◇ et ladite unité de reconstitution (**11ᵤ**) comportant et mettant en oeuvre une phase de mise en oeuvre dudit logiciel d'utilisation (**2ᵤ**) avec les données modifiées (**D'**),
• des moyens assurant la détermination d'au moins un paramètre de sortie (**Pₛ**) à partir du secret de reconstitution (**Sᵤ**) et du paramètre d'entrée (**Pₑ**),
• des moyens de transfert du paramètre de sortie (**Pₛ**) de ladite unité de reconstitution (**11ᵤ**) au système d'utilisation (**3ᵤ**) qui utilise au moins la fonction de reconstitution (**Fᵤ**) et au moins en partie, le paramètre de sortie (**Pₛ**), en vue d'obtenir les données originales, **caractérisé en ce que** le système d'utilisation est arrangé de façon à permettre un utilisateur n'ayant pas ladite unité de reconstitution (**11ᵤ**) d'utiliser le logiciel d'utilisation au mieux avec les données modifiées (**D'**).

13. - Dispositif selon la revendication 12, **caractérisé en ce que**, dans la phase de génération de données modifiées (**D'**), ladite unité de génération (**11_{g}**) contient ledit secret de génération permettant d'assurer la détermination de données modifiées (**D'**).

## Claims

1. - A method of making a user piece of software (2ᵤ) secure by means of a reconstitution unit (11ᵤ) containing at least one reconstitution secret (Sᵤ), said piece of software operating on a user data processing system (3ᵤ),
→ in a stage of generating modified data (D'):
- in a substage of creating data, in using generation piece of software to establish "original" data (D) associated with the user piece of software (2ᵤ);
- in a modification substage, in using a generation secret (S_{g}) and at least a portion of the associated original data (D) to determine modified data (D');
→ in a stage of making available, distributing the user piece of software (2ᵤ) and the associated modified data (D') to a user; and
→ in a stage of using the user piece of software (2ᵤ) together with the associated modified data (D') on a user system (3ᵤ), and in a substage of reconstituting the original data;
• for a user possessing a reconstitution unit (11ᵤ) including a reconstitution secret (Sᵤ) in:
◇ selecting by said user data processing system (3ᵤ) an input parameter (Pₑ) constituted by at least a portion of the modified data (D');
◇ transferring the input parameter (Pₑ) from the user data processing system (3ᵤ) to the reconstitution unit (11ᵤ);
◇ enabling the reconstitution unit (11ᵤ) to determine at least one output parameter (Pₛ) on the basis of the reconstitution secret (Sᵤ) and the input parameter (Pₑ);
◇ transferring the output parameter (Pₛ) from the reconstitution unit (11ᵤ) to the user data processing system (3ᵤ); and
◇ running in the user data processing system at least one reconstitution function (Fᵤ) making use of at least a portion of the output parameter (Pₛ) to obtain the original data (D);
• the method being **characterised in that** it consists, for a user not possessing the reconstitution unit (11ᵤ), in allowing the user piece of software (2ᵤ) to be used at best with the modified data with the help of the user data processing system.

2. - A method according to claim 1, **characterised in that** it consists in:
- subdividing the modified data (D') into at least a first portion (D'₁) and a second portion (D'₂);
- selecting the first portion (D'₁) of the modified data as the input parameter (Pₑ); and
- running a reconstitution function (Fᵤ) which delivers the original data (D) by using the output parameter (Pₛ) and the second portion (D'₂) of the modified data.

3. - A method according to claim 1, **characterised in that** it consists in:
- subdividing the modified data (D') into at least a first portion (D₁) and a second portion (D'₂);
- selecting the first portion (D₁) of the modified data as the input parameter (Pₑ); and
- running a reconstitution function (Fᵤ) which delivers the original data by using the output parameter (Pₛ), and the first and second portions (D₁, D'₂) of the modified data.

4. - A method according to claim 1, **characterised in that** it consists in:
- subdividing the modified data (D') into at least a first portion (D₁), a second portion (D'₂), and a third portion (D₃);
- determining the input parameter (Pₑ) on the basis of at least the first portion (D₁) and at least the third portion (D₃); and
- running a reconstitution function (Fᵤ) which delivers the original data (D) by using the output parameter (Pₛ), the first portion (D₁) and the second portion (D'₂) of the modified data.

5. - A method according to claim 3 or claim 4, **characterised in that** it consists in:
- selecting as the input parameter (Pₑ) an intermediate input parameter (Pₑᵢ) defined by the user data processing system (3ᵤ) from an intermediate translation function (Hᵤ) using a portion of the modified data; and
- determining the output parameter from the reconstitution secret (Sᵤ) and the input parameter (Pₑ) as constituted by the intermediate input parameter (Pₑᵢ) and optionally the third portion of the data (D₃).

6. - A method according to claim 1, **characterised in that** it consists in determining the modified data (D') from a generation secret (S_{g}) contained in a generation processing and memorizing unit (11_{g}).

7. - A method according to claim 1, **characterised in that** it consists in determining the modified data (D') from a generation secret (S_{g}) associated with a generation piece of software (2_{g}).

8. - A method according to claim 3 or claim 4, **characterised in that** it consists in repeating the following operations n times, where n ≥ 1:
- subdividing previously obtained data at least into first and second portions;
- determining at least one output parameter on the basis of a function of a portion of the data and of one or more user secrets different from or identical to the previously used secret(s);
- modifying at least one of the other portions of the data by means of a translation function identical to or different from the function used previously; and
- reconstituting the data after each stage of processing the data.

9. - A method according to claim 8, **characterised in that** it consists, in the substage of reconstituting the original data (D):
- in a first processing step:
• in subdividing the modified data (D') into at least a first portion (D'₁) and a second portion (D'₂);
• in using at least part of the second portion (D'₂) as the input parameter for the reconstitution unit (11ᵤ) in order to recover the first portion (D₁) of the original data; and
• in making up intermediate data comprising at least the first portion (D₁) of the original data and the modified second portion (D'₂) of the data; and
- in a second processing step:
• in using at least part of the first portion (D₁) of the data as an input parameter for the reconstitution unit (11ᵤ) in order to recover the second portion (D₂) of the original data; and
• in reconstituting the original data (D) from the first portion (D₁) and the second portion (D₂) of the data.

10. - A method according to claim 8 or claim 9, **characterised in that** it consists in performing the operations of translating the original data (D) to obtain modified data (D') n times, where n ≥ 1, said operations being performed in the reverse order to the operations for translating the modified data (D') into original data (D).

11. - A method according to claim 1, **characterised in that** it consists in writing modified data (D') onto a data storage medium (6ᵤ) associated with the user data processing system (3ᵤ) to enable the modified data (D') to be used during a stage of running the user piece of software (2ᵤ).

12. - Apparatus for making a user piece of software (2ᵤ) secure by means of a reconstitution unit (11ᵤ) containing at least one reconstitution secret (Sᵤ), said piece of software running on a user system (3ᵤ), and the apparatus comprising a generation unit (11g) that allocates to said user piece of software (2ᵤ) modified data (D') obtained during a stage of generating modified data (D') from a generation secret (S_{g}) and at least a portion of original data (D) associated with said user piece of software;
◇ said user system (3ᵤ) comprising and running during a stage of running said user piece of software (2ᵤ) together with the modified data (D'),
• means enabling an input parameter (Pₑ) to be determined as constituted by at least a portion of the modified data (D'):
• means for transferring the input parameter (Pₑ) from the user system (3ᵤ) to the reconstitution unit (11ᵤ); and
• at least one reconstitution function (Fᵤ); and
◇ said reconstitution unit (11ᵤ) comprising and running during a stage of running said user piece of software (2ᵤ) together with the modified data (D'),
• means for determining at least one output parameter (Pₛ) from the reconstitution secret (Sᵤ) and the input parameter (Pₑ); and
• means for transferring the output parameter (Pₛ) from said reconstitution unit (11ᵤ) to the user system (3ᵤ) which uses at least the reconstitution function (Fᵤ) and at least part of the output parameter (Pₛ) in order to obtain the original data, **characterised in that** the user systems is arranged such that it allows a user not possessing said reconstitution unit (11ᵤ), to make use of the user piece of software at best with the modified data (D').

13. - Apparatus according to claim 12, **characterised in that**, in the stage of generating modified data (D'), said generation unit (11_{g}) contains said generation secret enabling the modified data (D') to be determined.

## Patentansprüche

1. Verfahren zum Sichern einer Anwendungssoftware (2ᵤ) ausgehend von einer Rekonstitutionseinheit (11ᵤ), die wenigstens ein Rekonstitutionsgeheimnis (Sᵤ) umfaßt, wobei die Software auf einem Anwendungsdatenverarbeitungssystem (3ᵤ) arbeitet, darin bestehend,
→ in einer ersten Phase zur Erzeugung modifizierter Daten (D'):
- in einer Unterphase zur Erzeugung von Daten, aus einer Generierungssoftware sogenannte Originaldaten (D) zu etablieren, die der Anwendungssoftware (2ᵤ) zugeordnet sind,
- in einer Unterphase zur Modifikation die Bestimmung von modifizierten Daten (D') aus einem Generierungsgeheimnis (S_{g}) und wenigstens einem Teil der zugeordneten Originaldaten (D) sicherzustellen,
→ in einer Phase zum Verfügbarmachen zu einem Anwender die Anwendungssoftware (2ᵤ) und die zugeordneten modifizierten Daten (D') zu verteilen,
→ und in einer Phase zum Einsatz auf einem Anwendungssystem (3ᵤ) der Anwendungssoftware (2ᵤ) mit den zugeordneten modifizierten Daten (D') in einer Unterphase zur Rekonstitution der Originaldaten:
• für einen Anwender, der über eine Rekonstitutionseinheit (11ᵤ) verfügt, die ein Rekonstitutionsgeheimnis (Sᵤ) umfaßt:
◇ durch das System zur Anwendungsdatenverarbeitung (3ᵤ) einen Eingangsparameter (Pₑ) zu wählen, der besteht aus wenigstens einem Teil der modifizierten Daten (D'),
◇ den Eingangsparameter (Pₑ) des Systems zur Anwendungsdatenverarbeitung (3ᵤ) zu der Rekonstitutionseinheit (11ᵤ) zu überführen,
◇ die Bestimmung durch die Rekonstitutionseinheit (11ᵤ) mit Hilfe des Systems zur Anwendungsdatenverarbeitung von wenigstens einem Ausgangsparameter (Pₛ) aus dem Rekonstitutionsgeheimnis (Sᵤ) und dem Eingangsparameter (Pₑ) sicherzustellen,
◇ den Ausgangsparameter (Pₛ) der Rekonstitutionseinheit (11ᵤ) zu dem Anwendungsdatenverarbeitungssystem (3ᵤ) zu überführen,
◇ und in dem Anwendungsdatenverarbeitungssystem wenigstens eine Rekonstitutionsfunktion (Fᵤ) auszuführen, die wenigstens teilweise den Ausgangsparameter (Pₛ) im Hinblick darauf verwendet, die Originaldaten (D) zu erhalten
**dadurch gekennzeichnet, daß** es darin besteht:
• für einen Anwender, der nicht über die Rekonstitutionseinheit (11ᵤ) verfügt, es zu erlauben, die Anwendungssoftware (2ᵤ) mit Hilfe des Systems zur Anwendungsdatenverarbeitung am besten mit den modifizierten Daten verwenden zu können.

2. Verfahren nach Anspruch 1, **dadurch gekennzeichnet, daß** es darin besteht:
- die modifizierten Daten (D') in wenigstens einen ersten Teil (D'₁) und einen zweiten Teil (D'₂) zu zerlegen,
- als Eingangsparameter (Pₑ) den ersten Teil (D'₁) der modifizierten Daten zu wählen,
- und eine Rekonstitutionsfunktion (Fᵤ), die die Originaldaten (D) verwendet, unter Verwendung des Ausgangsparameters (Pₛ) und des zweiten Teils (D'₂) der modifizierten Daten auszuführen.

3. Verfahren nach Anspruch 1, **dadurch gekennzeichnet, daß** es darin besteht:
- die modifizierten Daten (D') in wenigstens einen ersten Teil (D₁) und einen zweiten Teil (D'₂) zu zerlegen,
- als Eingangsparameter (Pₑ) den ersten Teil (D₁) der modifizierten Daten zu wählen,
- und eine Rekonstitutionsfunktion (Fᵤ) auszuführen, die die Originaldaten unter Verwendung des Ausgangsparameters (Pₛ), des ersten Teils (D₁) und des zweiten Teils (D'₂) der modifizierten Daten liefert.

4. Verfahren nach Anspruch 1, **dadurch gekennzeichnet, daß** es darin besteht:
- die modifizierten Daten (D') in wenigstens einen ersten Teil (D₁), einen zweiten Teil (D'₂) und einen dritten Teil (D₃) zu zerlegen,
- den Eingangsparameter (Pₑ) aus wenigstens dem ersten Teil (D₁) und wenigstens dem dritten Teil (D₃) zu bestimmen,
- und eine Rekonstitutionsfunktion (Fᵤ) auszuführen, die die Originaldaten (D) unter Verwendung des Ausgangsparameters (Pₛ), des ersten Teils (D₁) und des zweiten Teils (D'₂) der modifizierten Daten liefert.

5. Verfahren nach Anspruch 3 oder 4, **dadurch gekennzeichnet, daß** es darin besteht:
- als Eingangsparameter (Pₑ) einen Zwischeneingangsparameter (Pₑᵢ) zu wählen, der definiert ist durch das Anwendungssystem mit Hilfe des Datenverarbeitungssystems (3ᵤ) aus einer Zwischenübersetzungsfunktion (Hᵤ), die einen Teil der modifizierten Daten verwendet,
- und die Bestimmung des Ausgangsparameters aus dem Rekonstitutionsgeheimnis (Sᵤ) und dem Eingangsparameter (Pₑ) sicherzustellen, der besteht aus dem Zwischeneingangsparameter (Pₑᵢ) und gegebenenfalls dem dritten Teil der Daten (D₃).

6. Verfahren nach Anspruch 1, **dadurch gekennzeichnet, daß** es darin besteht, die Bestimmung von modifizierten Daten (D') aus dem Generierungsgeheimnis (S_{g}) sicherzustellen, das in einer Verarbeitungs- und Speichereinheit zur Generierung (11_{g}) enthalten ist.

7. Verfahren nach Anspruch 1, **dadurch gekennzeichnet, daß** es darin besteht, die Bestimmung der modifizierten Daten (D') aus einem Generierungsgeheimnis (S_{g}) sicherzustellen, das einer Generierungssoftware (2_{g}) zugeordnet ist.

8. Verfahren nach Anspruch 3 oder 4, **dadurch gekennzeichnet, daß** es darin besteht, n-Mal, mit n ≥1, die Vorgänge erneut zu starten:
- einer Zerlegung der vorher erhaltenen Daten in wenigstens einen ersten und zweiten Teil,
- einer Bestimmung wenigstens eines Ausgangsparameters aus einer Funktion von einem oder mehreren Anwendungsgeheimnissen, die unterschiedlich oder identisch zu jenen zuvor verwendeten sind und aus einem Teil der Daten,
- einer Modifikation wenigstens von einem der anderen Teile der Daten durch eine Übersetzungsfunktion, die identisch oder verschieden von jener vorher verwendeten ist,
- und die Rekonstitution der Daten nach jeder Verarbeitungsphase der Daten.

9. Verfahren nach Anspruch 8, **dadurch gekennzeichnet, daß** es darin besteht, in der Unterphase zur Rekonstitution der Originaldaten (D):
- in einem ersten Verarbeitungsschritt:
• die modifizierten Daten (D') in wenigstens einen ersten Teil (D'₁) und einen zweiten Teil (D'₂) zu zerlegen,
• wenigstens teilweise den zweiten Teil (D'₂) als Eingangsparameter der Rekonstitutionseinheit (11ᵤ) im Hinblick darauf zu verwenden, den ersten Teil (D₁) der Originaldaten wiederzufinden,
• und Zwischendaten zu bilden, die aus wenigstens dem ersten Teil (D₁) der Originaldaten und dem zweiten modifizierten Teil (D'₂) der Daten zusammengesetzt sind,
- und in einer zweiten Verarbeitungsphase:
• wenigstens teilweise den ersten Teil (D₁) der Daten als Eingangsparameter der Rekonstitutionseinheit (11ᵤ) im Hinblick darauf zu verwenden, den zweiten Teil (D₂) der Originaldaten wiederzufinden,
• und die Originaldaten (D) durch den ersten Teil (D₁) und den zweiten Teil (D₂) der Daten zu rekonstituieren.

10. Verfahren nach Anspruch 8 oder 9, **dadurch gekennzeichnet, daß** es darin besteht, n-Mal, mit n ≥1, in umgekehrter Reihenfolge die Übersetzungsvorgänge der modifizierten Daten (D') in Originaldaten (D) und die Übersetzungsvorgänge der Originaldaten (D) zum Erhalt der modifizierten Daten (D') durchzuführen.

11. Verfahren nach Anspruch 1, **dadurch gekennzeichnet, daß** es darin besteht, die modifizierten Daten (D') auf einem Träger (6ᵤ) zur Datenspeicherung zu schreiben, der dem System zur Anwendungsdatenverarbeitung (3ᵤ) zugeordnet ist, um die Verwendung der modifizierten Daten (D') bei der Phase eines Ausführens der Anwendungssoftware (2ᵤ) zu erlauben.

12. Verfahren zum Sichern einer Anwendungssoftware (2ᵤ) aus einer Rekonstitutionseinheit (11ᵤ), die wenigstens ein Rekonstitutionsgeheimnis (Sᵤ) umfaßt, wobei die Software auf einem Anwendungssystem (3ᵤ) arbeitet, umfassend eine Einheit zur Generierung (11_{g}), welche der Anwendungssoftware (2ᵤ) modifizierte Daten (D') zuordnet, die bei einer Phase zur Generierung modifizierter Daten (D') erhalten werden, aus einem Generierungsgeheimnis (S_{g}) und wenigstens einem Teil der Originaldaten (D), die der Anwendungssoftware zugeordnet sind, wobei das Anwendungssystem (3ᵤ) umfaßt und während einer Phase zum Ausführen der Anwendungssoftware (2ᵤ) mit den modifizierten Daten (D') einsetzt,
• Mittel, die es erlauben, einen Eingangsparameter (Pₑ) zu bestimmen, der wenigstens teilweise aus den modifizierten Daten (D') gebildet ist,
• Mittel zum Überführen des Eingangsparameters (Pₑ) des Anwendungssystems (3ᵤ) zur Rekonstitutionseinheit (11ᵤ),
• wenigstens eine Rekonstitutionsfunktion (Fᵤ),
◇ und wobei die Rekonstitutionseinheit (11ᵤ) umfaßt und während einer Phase zum Ausführen der Anwendungssoftware (2ᵤ) mit den modifizierten Daten (D') einsetzt,
• Mittel, die die Bestimmung wenigstens eines Ausgangsparameters (Pₛ) aus dem Rekonstitutionsgeheimnis (Sᵤ) und dem Eingangsparameter (Pₑ) sicher stellen,
• Mittel zum Überführen des Eingangsparameters (Pₑ) der Rekonstitutionseinheit (11ᵤ) zu dem Anwendungssystem (3ᵤ), das wenigstens eine Rekonstitutionsfunktion (Fᵤ) und wenigstens teilweise den Ausgangsparameter (Pₛ) in Hinblick darauf verwendet, die Originaldaten zu erhalten, **dadurch gekennzeichnet, daß** das Anwendungssystem derart eingerichtet ist, um einem Anwender, der nicht über die Rekonstitutionseinheit (11ᵤ) verfügt, es zu erlauben, die Anwendungssoftware (2ᵤ) mit Hilfe des Systems zur Anwendungsdatenverarbeitung am besten mit den modifizierten Daten (D') verwenden zu können.

13. Vorrichtung nach Anspruch 12, **dadurch gekennzeichnet, daß** in der Phase zur Generierung modifizierter Daten (D') die Einheit zur Generierung (11_{g}) das Generierungsgeheimnis enthält, das es erlaubt, die Bestimmung der modifizierten Daten (D') sicher zu stellen.
